# EUROPEAN PATENT APPLICATION

(11) **EP 2 079 233 A2**
(43) Date of publication of application: **15.07.2009**
(21) Application number: 08021013.1
(22) Date of filing: 03.12.2008
(51) Int. Cl.: H04N 5/44, H04N 5/50

(54) **Digital broadcast receiver and digital broadcast receiving method**

(30) Priority: 11.01.2008 JP 2008004427
(71) Applicant: Hitachi Ltd., Chiyoda-ku Tokyo 100-8280 (JP)
(72) Inventor: Fujihira, Toru, Tokyo 100-8220 (JP)
(74) Representative: Strehl Schübel-Hopf & Partner

(57) **Abstract**

A digital broadcast receiver offering lower costs, capable of shortening the delay time required for the video display while receiving the digital broadcast, and further causing the viewer no abnormal viewing sensations. The digital broadcast receiver demultiplexes the video and audio elementary stream and time information from the transport stream, then monitors the buffer capacity during buffering of the video and audio elementary streams, and retains the statistical information. The digital broadcast receiver then checks the statistical information, and sets the play delay time for the decoded video frames and decoded audio frames from the beginning of the elementary stream. After starting the display, operation is in slow-motion-play-with-audio until the display time for a particular frame returns to the original value and the stream buffer capacity is restored. The digital broadcast receiver might instead analyze the video frame and the audio frame, and repeatedly play frames in scenes with no video movement and also scenes with no sound.

## Description

### TECHNICAL FIELD TO WHICH THE INVENTION BELONGS

This invention relates to a digital broadcast receiver, and to a digital broadcast receiving method; and relates to a digital broadcast receiver, and to a digital broadcast receiving method preferred for use in applications for shortening the delay time until display when receiving, decoding and displaying digital television transmission signals.

### RELATED BACKGROUND ART

Progress has been made in recent years in applying digital technology to television broadcasts.

Digital broadcasts feature high audio and video quality as well as excellent transmission efficiency compared to conventional analog broadcasting.

Digital broadcasting is therefore expected to expand to new media such as IP networks as well as conventional broadcast media such as satellite wave and ground (terrestrial) wave and cable television, etc.

Digital broadcasting is also known to have unique problems. One of these problems is that tuning takes more time than in analog broadcasting.

In the Association of Radio Industries and Businesses, "Video Encoding, Audio Encoding and Multiplexing Methods for Digital Broadcasting", Standards ARIB STD-B32, Ver. 1.8, pp. 30-32 for example in digital-terrestrial broadcasts, approximately 2 seconds is required for a video display after tuning. This delay is much longer than for analog broadcasts, and is a particular problem for viewers during so-called zapping (to mute commercials, etc.).

In order to resolve this problem, the JP-A-2000-101467 discloses a digital broadcast receiving terminal device including multiple tuners and decoders operating in parallel. This device shortens the tuning time by predicting the channel the viewer will tune in to next on a tuner other than the tuner that is currently receiving the channel watched by the viewer, and then receiving and decoding that next channel.

The JP-A-2001-346109 discloses a tuning method for a digital broadcast receiver for shortening the tuning time by predicting information called PSI (Program Specific Information) required for extracting streams and descrambling of information identifying video and audio multiplexed onto the transport stream.

### DISCLOSURE OF THE INVENTION

In Association of Radio Industries and Businesses, "Video Encoding, Audio Encoding and Multiplexing Methods for Digital Broadcasting", Standards ARIB STD-B32, Ver. 1.8, pp. 30-32, the time required after tuning in a digital terrestrial broadcast until displaying the video can be itemized as follows. The time required for the front end to receive and demodulate the broadcast carrier is approximately 1.2 seconds, the time required for receiving the PSI is approximately 0.1 seconds, the time for receiving the sequence header required to start decoding the video stream is approximately 0.5 seconds, and the delay time for video synchronizing with the display time information contained in the transport stream is approximately 0.5 seconds.

The device disclosed in JP-A-2000-101467 contains multiple tuners and decoders, and predicts and receives in advance the next channel the viewer will select, and so can display the video without requiring any of the above time periods.

However, these inventions have the problem that the desired effect is not rendered if the next channel selected by the viewer was not predicted by the device unless the number of tuners already matches the number of receivable channels, or cannot yield the desired effect if the viewer frequently switches channels by so-called zapping.

Moreover, the cost required for the hardware drastically increases when the device contains multiple tuners and decoders and this method is not practical for use in most products.

The method disclosed in the JP-A-2001-346109 reduces the time required for receiving PSI by predicting the PSI, yet the amount of PSI data is only a small percentage of the TS (Transport Stream) and takes up little of the overall processing time so this method is unlikely to yield effective results. This method as expected also has the problem of providing no effects when the prediction is incorrect.

This invention was rendered to resolve the aforementioned problems, and has the object of providing a digital broadcast receiver and a digital broadcast receiving method for shortening the delay time required for a video display when receiving a digital broadcast, while also preventing a cost increase, and moreover without causing an abnormal viewing sensation for the viewer.

The digital broadcast receiver device of this invention includes a TS receiver for receiving digital television broadcast signals and demodulating the transport stream; and a TS demultiplexer to isolate the time information, the video elementary stream and the audio elementary stream from the transport stream demodulated by the TS receiver; and a video stream buffer for storing the video elementary stream; and a video decoder for decoding the video elementary stream output from the video stream buffer; and an audio stream buffer for storing audio frames output from the audio stream buffer; and an audio decoder for decoding audio elementary streams output from the audio stream buffer.

The initial delay decision part monitors the buffer occupancy (rate) in the video stream buffer and the audio stream buffer, and from the statistical data on the buffer occupancy (rate) sets the play delay time of the decoded video frame and the decoded audio frame from decoding the beginning of the audio elementary stream and the video elementary stream.

The display/output timing control part utilizes the time information, and the play delay time set by the initial delay decision part to control the output and the display of the decoded video frame and the decoded audio frame.

The play delay time can be shortened if the stream buffer occupancy rate is high (full) at this time. When a short play delay time is set, the display/output timing control part regulates the slow-motion-play-with-audio to a specified speed until the frame display time returns to the original display time in order to prevent underflow. By controlling the slow-motion-play-with-audio for just a specified time, the buffer occupancy rate can be allowed to recover, and play performed without causing an abnormal viewing sensation for the viewer.

The scene analyzing part (or unit) judges whether there is motion in the decoded video frame and whether there is sound in the decoded audio frame. The display/output timing control part (or unit) is set to repeatedly play those scenes where the scene analyzing part judges there is no motion in the decoded video frame and also no audio in the decoded audio frame.

By shortening the play delay time in this way, the buffer occupancy rate can be allowed to recover without causing an abnormal viewing sensation for the viewer.

The present invention can in this way provide a digital broadcast receiver and a digital broadcast receiving method for shortening the delay time required for a video display when receiving a digital broadcast while also preventing a cost increase and moreover without causing an abnormal viewing sensation for the viewer.

### BRIEF DESCRIPTION OF THE DRAWINGS

FIG. 1 is a block diagram of the digital broadcast receiver of the first embodiment of this invention;
FIG. 2 is a graph for describing the relation between time and buffer occupancy rate in the elementary stream buffer for the STD; and is a graph showing the case where there are comparatively drastic fluctuations in the elementary stream buffer occupancy rate;
FIG. 3 is a graph for describing the relation between time and buffer occupancy rate in the elementary stream buffer for the STD; and is a graph where the fluctuations in the buffer occupancy rate of the elementary stream buffer are relatively small compared to FIG. 2;
FIG. 4 is a graph for describing the relation between time and the buffer occupancy rate in the elementary stream buffer for the STD; and is a graph for showing the state of the elementary stream buffer when the receiver speeds up the decoding time compared to the example in FIG. 3;
FIG. 5 is a graph for describing the relation between time and the buffer occupancy rate in the elementary stream buffer for the STD; and is a graph for describing the relation between time and the elementary stream buffer occupancy rate during slow-motion-play-with-audio;
FIG. 6 is a graph for describing the relation between time and the elementary stream buffer occupancy rate during repeated play, when video frames with no video motion and audio frames with no audio are detected;
FIG. 7 is a block diagram of the digital broadcast receiver of the second embodiment of this invention; and
FIG. 8 is a drawing showing an example of the structure of the MPEG transport stream.

### DESCRIPTION OF SPECIAL EMBODIMENT

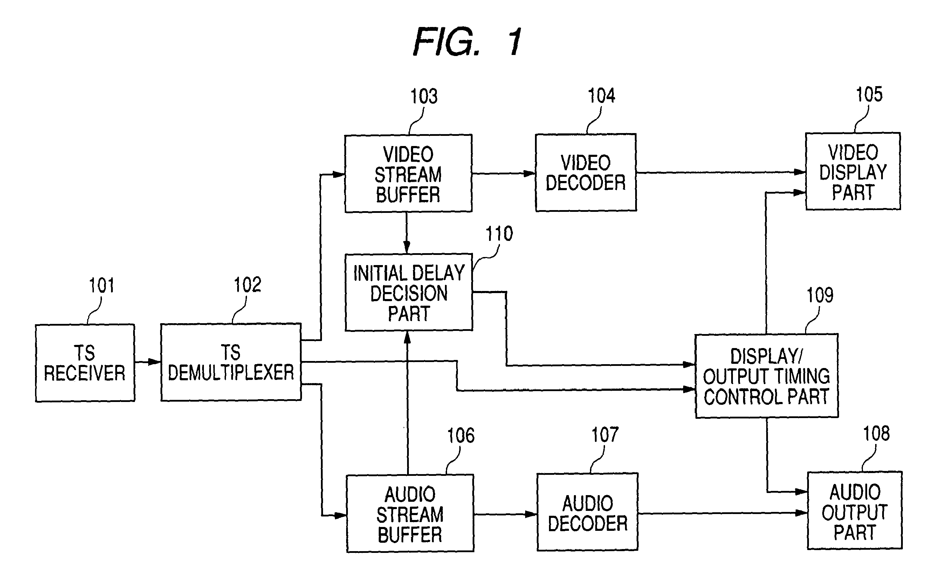

The embodiments of this invention are described next while referring to FIG. 1 through FIG. 8.

The digital broadcast receiver of this invention is applicable to digital broadcast receivers for receiving digital television transmission signals that are multiplexed digitally compressed video and audio data and without relying on transfer media such as satellite waves, terrestrial waves, cables, or IP networks, etc.
(System for synchronizing the audio and video displays when receiving digital broadcasts)

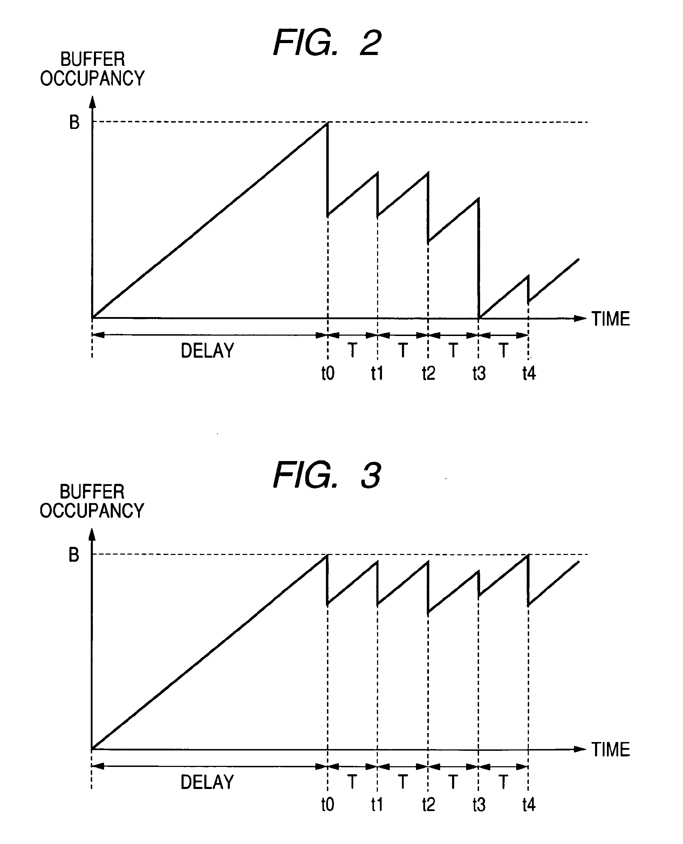

Prior to describing each embodiment, the system for synchronizing audio and video displays when receiving digital broadcasts is briefly described while referring to FIG. 2 through FIG. 4, and FIG. 8.

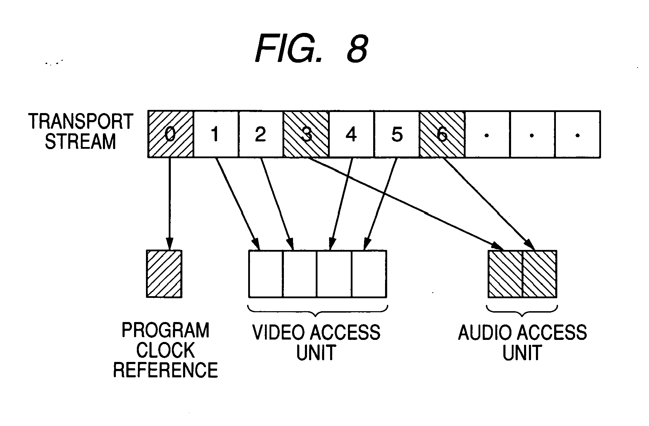

The basic concept and synchronization with the MPEG transport stream are first of all described by utilizing FIG. 8.

One example of the MPEG transport stream is shown in FIG. 8.

A digital broadcast is the sending of a MPEG transport stream of multiplexed and digitally compressed and encoded audio and video stream as well as their incidental information. The MPEG transport stream is a transport stream for MPEG2 system standards (ISO/IEC13818-1) and configured in a packet format for transmission. The digitally compressed video and audio streams are called elementary streams. Each elementary stream is subdivided into consecutive packets and sent, however the amount of coding differs for each frame. The elementary streams are buffered and time information is transmitted for displaying the decoded video and audio in order to synchronize with the frame display in the receiver.

As shown in FIG. 8, the packet 0 of the MPEG transport stream contains a PCR (Program Clock Reference) for performing decoding and display in the receiver. The PCR is sent periodically in the MPEG transport stream, and displays the system clock time at each encoding time point on the transmit side. In the receiver, the PCR corrects the STC (System Time Clock) serving as the standard clock in the decoding operation, and absorbs any clock jitter occurring between transmitting and receiving.

The packets 1, 2, 4, 5 of the MPEG transport stream make up an elementary stream of video access units. The packets 3, 6 of the MPEG transport stream make up an elementary stream of audio access units.

The access unit as referred to here is the elementary stream data required for decoding the video or audio frame. The quantity of data differs in each access unit. The packets containing the lead section of the access units internally contain a PTS (Presentation Time Stamp) as well as a DTS (Decoding Time Stamp) for frames decoded the access unit. The PTS and the DTS display the virtual display time and the decoding time of each frame based on the individual PCR.

The receiver decodes and displays the applicable frame after referring to the STC and DTS/PTS. Use of a virtual receiver STD (System Target Decoder) is assumed on the transmit side and the PTS and DTS are set in order to prevent the audio or video elementary stream buffer (Hereafter called, "elementary stream buffer".) from under or overflowing and causing failures. The maximum capacity of the elementary stream buffer is about 0.5 seconds; and the delay time from receiving the access unit until displaying the frame determined by the PTS and DTS is set to nearly the same value.

The time in the STD required for decoding the elementary stream is assumed to be 0 (zero) seconds, and the PTS and DTS are usually the same value so the DTS is omitted. However the DTS is not omitted when the frame sequence has been interchanged by two-way prediction coding of the video stream, because the PTS will be different from the DTS.

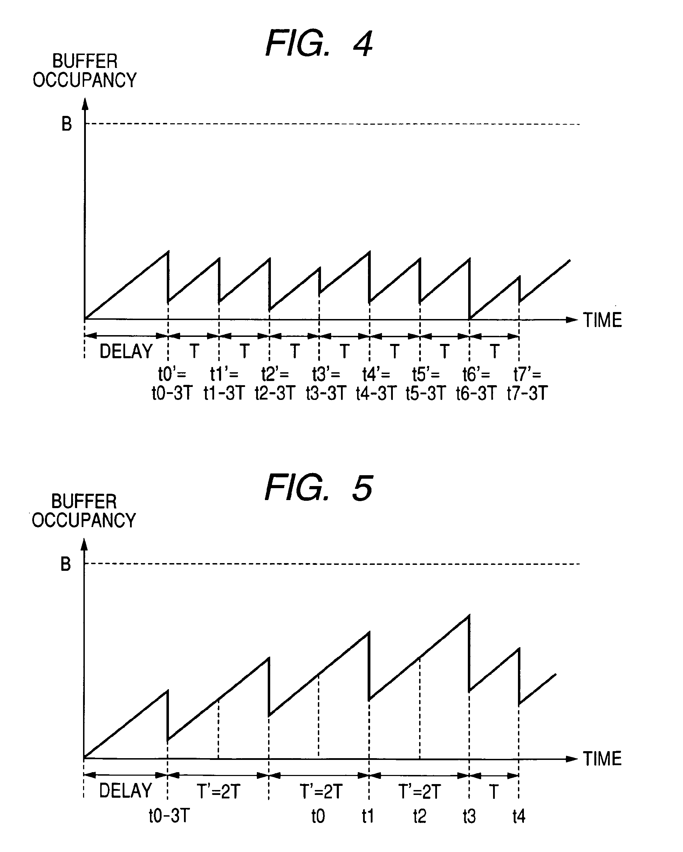

The interrelation between time and buffer occupancy in the elementary stream buffer in the STD is described next by using FIG. 2 and FIG. 4.

FIG. 2 through FIG. 4 are graphs for describing the relation between time and buffer occupancy in video streams in the STD.

FIG. 2 is a graph showing the case where there are drastic fluctuations in the buffer occupancy (rate) of the elementary stream buffer. FIG. 3 is a graph where the fluctuations in the buffer occupancy (rate) of the elementary stream buffer are relatively small compared to FIG. 2.

FIG. 4 is a graph showing the interrelation between time and the buffer occupancy (rate) of the elementary stream buffer when the STD speeded up the decoding time versus the elementary stream in FIG. 3.

The origin point on the time axis is the time that the lead point of the elementary stream arrived at the elementary stream buffer.

In the example shown in FIG. 2, the times t0, t1, t2, t3, t4 are the times that access units within each elementary stream are extracted from the elementary stream buffer and decoded, and are matched with the DTS of each access unit. The interval T for the DTS is the frame display period.

The elementary stream is input at a fixed rate but there are drastic fluctuations in the buffer occupancy rate for the buffer capacity B of the elementary stream buffer due to large differences in the coding quantities of each access unit.

When the delay time is shortened here for example by making t0, t1, t2, t3, t4 faster than the DTS, an underflow then occurs at t3, and the delay time returns to the original time for each corresponding access unit and onwards, and therefore the (current) frame display period T cannot be maintained.

Conversely, when the delay time is extended by delaying the times t0, t1, t2, t3, t4, then an overflow occurs in t0, a portion of the elementary stream is lost, and normal decoding can no longer be performed. The decoding time and the display time in the receiver therefore cannot usually be shifted.

However, the fluctuation in the access unit encoding quantity is usually not very large even though there is an effect on the contents of the video material.

FIG. 3 shows the state of the elementary stream buffer when there is little fluctuation in the coding quantity. The coding quantity for each access unit extracted from the buffer at the times t0, t1, t2, t3, t4 is approximately the same as can be seen in FIG. 3. Moreover the average value for fluctuations in the coding quantity roughly matches the input rate to the buffer. The buffer occupancy rate is therefore maintained at a comparatively high level with few fluctuations.

In this case, no underflow occurs even if the decoding times t0, t1, t2, t3, t4 are made somewhat faster than the DTS, and the delay time can be shortened.

FIG. 4 is a graph for showing the state of the elementary stream buffer when the receiver speeds up the decoding time compared to the example in FIG. 3.

In this case, the decoding times t0', t1', t2', t3', t4', ... are speeded up relative to t0, t1, t2, t3, t4, ... just equal to the time 3T so as not cause underflows at each time. The buffer occupancy rate is consequently only decreased by the amount of the elementary stream that enters the buffer during time 3T; however, the delay time can be shortened by a time equal to 3T.

The decoding time can in this way be adjusted according to the encoding quantity of each access unit at the start of decoding, so that the delay time can be shortened.

However, even when the delay time can be shortened at the start of receiving, large localized fluctuations are likely to appear in the coding quantities of each access unit during long-term viewing. These fluctuations will cause underflows to occur, so that the sampling of access units from the buffer must be delayed in order to prevent underflows when the delay time has been shortened.

However then there is the problem that the viewer might feel that the video is abnormal during viewing if the decoding and display have been delayed.

The following embodiments do not cause the viewer to experience an abnormal viewing sensation while viewing the video even when the delay time has been shortened.

### First Embodiment

The first embodiment of this invention is described next while referring to FIG. 1 and FIG. 5.

The structure of the digital broadcast receiver of the first embodiment of this invention is first of all described while referring to FIG. 1.

FIG. 1 is a block diagram of the digital broadcast receiver of the first embodiment of this invention

As shown in FIG. 1, the digital broadcast receiver of this embodiment contains a TS receiver 101, a TS demultiplexer 102, a video stream buffer 103, a video decoder 104, a video display part 105, an audio stream buffer 106, and audio decoder 107, an audio output part 108, a display/output timing control part 109, and an initial delay decision part 110.

The TS receiver 101 receives the broadcast according to the transport media, and outputs an MPEG transport stream. When receiving for example a terrestrial digital broadcast, the TS receiver 101 receives the broadcast waves, and after OFDM (Orthogonal Frequency Division Multiplexing) demodulation, performs error correction processing, and outputs the MPEG transport stream to the TS demultiplexer 102.

The TS demultiplexer 102 demultiplexes (isolates) the time information PTS, DTS and the video and audio elementary streams from the MPEG transport stream obtained at the TS receiver 101.

The TS demultiplexer 102 then sends this demultiplexed (isolated) time information to the display/output timing control part 109.

The video elementary stream is sent to the video stream buffer 103, and is sent to the video decoder 104 after being temporarily stored. The video decoder 104 decodes the video elementary stream, and outputs the decoded frame to the video display part 105. The video display part 105 then displays the video frame according to the timing specified by the display/output timing control part 109.

After being temporarily stored in the audio stream buffer 106, the audio elementary stream is sent to the audio decoder 107. This audio decoder 107 decodes the audio elementary stream, and outputs the decoded frame to the audio output part 108. The audio output part 108 then displays the audio frame according to the timing specified by the display/output timing control part 109.

The initial delay decision part 110 monitors the buffer occupancy (rate) in the video stream buffer 103 and the audio stream buffer 106, and though not shown in the drawing, retains statistical information including the average coding quantity of the access unit for a specified period; and the minimum occupancy quantity and average occupancy quantity for each channel for a specified period within the memory.

At the start of receiving, the initial delay decision part 110 sets the frame display-output delay times for the video stream buffer 103 and the audio stream buffer 106 from the past statistical data, and sends these to the display/output timing control part 109.

The initial delay decision part 110 usually shortens the delay time when the buffer occupancy rate in the stream is large. Conversely, the initial delay decision part 110 extends the display-output delay time to prevent an underflow when the buffer occupancy rate in the transfer stream is small.

After receiving starts, the delay time may also be set to match the buffer occupancy (rate) after a specified number of access units were decoded.

The display/output timing control part 109 also controls the frame display timing in the video display part 105 and the audio output part 108 by way of the frame display delay time that was set by the initial delay decision part 110, and by the time information from the TS demultiplexer 102. At this time, the display/output timing control part 109 controls the video and audio frame display to the slow-motion-play-with-audio (speed) in a range not affecting the viewing sensation, until the display time returns to the original value. The play speed may be a fixed time or may be varied according to the initial frame display delay time.

This slow-motion-play-with-audio signifies a play that is slower than standard, and executed along with the video decoding-display time and audio output time.

This embodiment, utilizes a scheme to shorten the initial delay time, and then secure an adequate buffer occupancy rate by slow-motion-play-with-audio to gradually restore the video and audio play time while limiting effects on the audio and video viewing. Slow-motion-play-with-audio for example may be performed at a speed 0.99 that of standard speed, so as not to cause an abnormal sensation during viewing.

The standard stream buffer state during slow-motion-play-with-audio is described next while referring to FIG. 5.

FIG. 5 is a graph for describing the relation between time and buffer occupancy in the elementary stream buffer during slow-motion-play-with-audio.

The initial delay time for the elementary stream set to a usual buffer occupancy rate shown in FIG. 3 is in this example advanced to a time equal to 3T as shown in FIG. 4. The frame is then set to T' = 2T and slowing played in slow-motion-play-with-audio.

At this time the frame display-play time at time point t3 is the same as shown in FIG. 3 so the frame play time is from there onwards played at T the same as in the example in FIG. 3.

In this example, a speed about 0.5 that of the standard speed was described to simplify the description. However, the actual frame display-output time during slow-motion-play-with-audio is preferably set so that the frame output-display time T' by slow-motion-play-with-audio is for example T' = 1.1T which is not much different from the standard speed, so as not to cause the viewer any abnormal viewing sensations.

The present embodiment in this way shortens the initial delay time until elementary stream decoding and play, and without causing an underflow in the elementary stream buffer at this time. Moreover, the video at receiver startup can be satisfactorily viewed without causing the viewer any abnormal viewing sensations.

### Second Embodiment

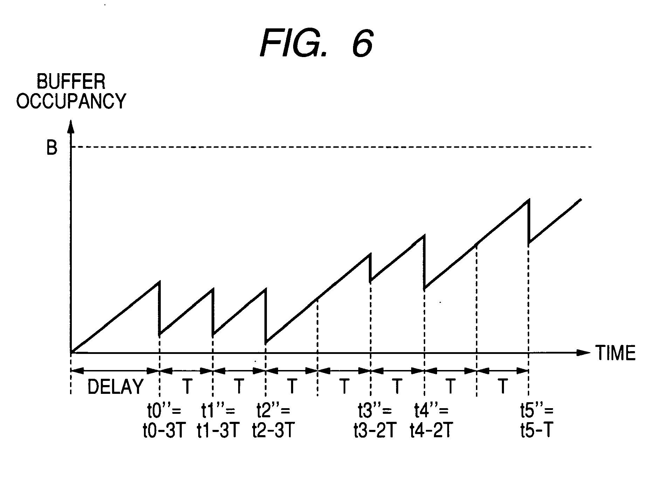

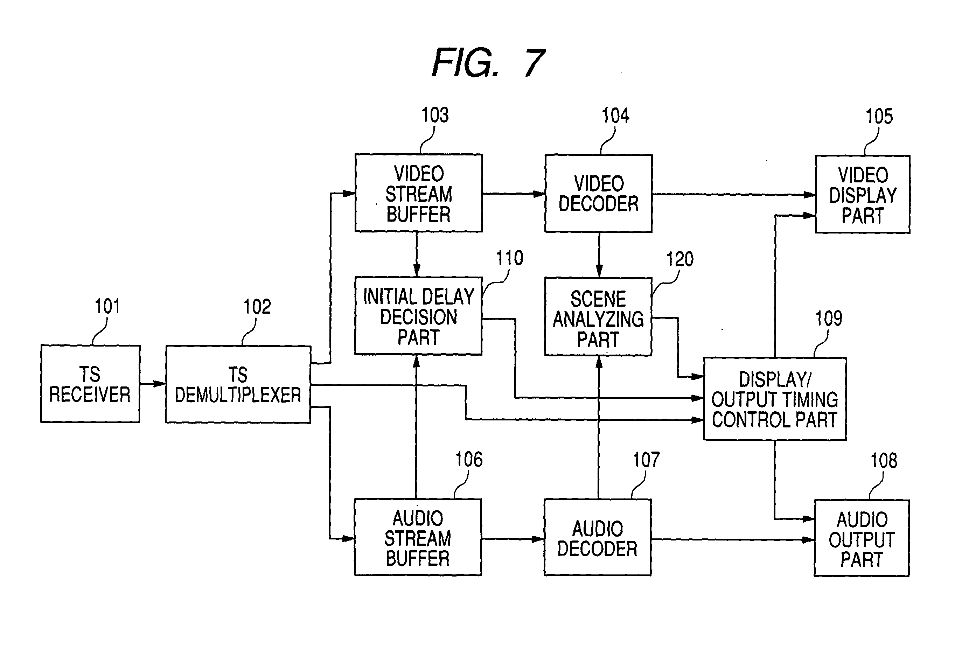

The second embodiment of this invention is described next while referring to FIG. 6 and FIG. 7.

The first embodiment employed a method to gradually restore the play speed by using slow-motion-play-with-audio so as not to cause an underflow when the initial delay time was advanced (speeded up).

In this embodiment, in order to prevent an underflow when the initial delay time was advanced, scenes with no motion and audio are detected, and those sections are played repeatedly, in this way a complete emptying of data from the buffer can be prevented.

The structure of the digital broadcast receiver of the second embodiment of this invention is first of all described by using FIG. 7.

FIG. 7 is a block diagram of the digital broadcast receiver of the second embodiment of this invention.

As shown in FIG. 2, the digital broadcast receiver of this embodiment is approximately the same structure as the digital broadcast receiver of the first embodiment shown in FIG. 1, and the operation of each component is the same; however, the unique feature of this embodiment is the scene analyzing part 120.

The scene analyzing part 120 analyzes the video stream that is input to the video decoder 104, and the audio stream that is input to the audio decoder 107, decides whether there is video motion or audio, and sends an output to the display/output timing control part 109.

The scene analyzing part 120 may for example utilize motion vectors and motion compensation prediction data in the stream in order to predict whether there is video motion.

The scene analyzing part 120 may also for example refer to the frequency conversion coefficients for encoding the audio stream.

When the scene analyzing part 120 decides that there is no audio and no motion in the video, while the frame display-output has been shortened more than the original delay time; the display control part 109 repeatedly plays video frames and audio frames (with no motion or audio) and extends the delay time. The display control part 109 may utilize slow-motion-play-with-audio the same as in the first embodiment of this invention or need not utilize slow-motion-play-with-audio.

The state of the elementary stream buffer when repeatedly playing frames, when video frames with no video motion and audio frames with no audio were detected is hereafter described while referring to FIG. 6.

FIG. 6 is a graph for describing the relation between time and the elementary stream buffer occupancy rate during repeated play, when video frames with no video motion and audio frames with no audio were detected.

Here, the times t0" , t1", t2" are respectively the same timing as t0' , t1', t2' shown in the graph in FIG. 4, and the delay time is shortened 3T compared to FIG. 3. When video frames with no video movement and audio frames with no audio are at this time detected at t2", t3", those frames are repeated, and the timing for acquiring the next data delayed just by T. Even if these frames are repeatedly displayed and output, the viewer will experience no abnormal viewing since there is no audio and no video movement. The delay time for t3" and t4" in this way becomes the shortened width 2T.
Moreover, by delaying the state of t4" and t5" just by T in the same way, the shortened width for delay time for t5" and onward can become the shortened width T. By returning the delay time to its original value in this way, underflows that affect the viewing experience of the viewer can be prevented.

The present embodiment shortens the initial delay time up to decoding and play of the elementary stream the same as the first embodiment of this invention, and without causing an elementary stream buffer underflow; moreover this embodiment has the benefit that effects on viewing are minimized during return of the frame display-output time to its original value by repeatedly playing scenes containing no video movement and also no audio.

## Claims

1. A digital broadcast receiver **characterized by** comprising:
a TS receiver (101) for receiving digital television broadcast signals, and demodulating the transport stream;
a TS demultiplexer (102) for demultiplexing the time information, the video elementary stream and the audio elementary stream from the transport stream demodulated by the TS receiver (101);
a video stream buffer (103) for storing the video elementary stream;
a video decoder (104) for decoding the video elementary stream that was output from the video stream buffer (103);
an audio stream buffer (106) for storing the audio elementary stream;
an audio decoder (107) for decoding the audio elementary streams output from the audio stream buffer (106);
an initial delay decision part (110) for setting the play delay time of the decoded video frames and the decoded audio frames from decoding the beginning of the audio elementary stream and the video elementary stream; and
a display/output timing control part (109) for controlling the output and the display of the decoded video frames and the decoded audio frames by utilizing the time information and the play delay time.

2. A digital broadcast receiver according to claim 1, further comprising:
a scene analyzing part (120) for deciding if there is motion in the decoded video frames and audio in the decoded audio frames,
**characterized in that** the display/output timing control part (109) for controls the display and output of the decoded video frames and the decoded audio frames by using the time information, the play delay time and the decision results from the scene analyzing part (120).

3. A digital broadcast receiver according to either of claim 1 or claim 2, **characterized in that** the initial delay decision part (110) monitors the buffer occupancy rate of the video stream buffer (103) and the audio stream buffer (106), and along with retaining the statistical data for each channel, utilizes that statistical data to set the play delay time of the decoded video frames and the decoded audio frames from the decoding of the beginning of the audio elementary stream and the video elementary stream.

4. A digital broadcast receiver according to either of claim 1 or claim 2, **characterized in that** the initial delay decision part (110) sets the play delay time of the decoded video frames and the decoded audio frames when receiving starts, by utilizing the occupancy rate of the video stream buffer (103) during decoding of a specified number of video frames as well as the occupancy rate of the audio stream buffer (106) during decoding of a specified number of audio frames.

5. A digital broadcast receiver according to claim 1,
**characterized in that** when the play delay time has been advanced, the display/output timing control part (109) performs slow-motion-play-with-audio at a specified speed until the display time for a particular frame returns to the original display time.

6. A digital broadcast receiver according to claim 1,
**characterized in that** the display/output timing control part (109) performs slow-motion-play-with-audio at a speed set adaptively according to the play delay time from decoding the beginning of the video elementary stream and the audio elementary stream.

7. A digital broadcast receiver according to claim 2,
**characterized in that** the display/output timing control part (109) repeatedly plays scenes judged by the scene analyzing part (120) to have no motion in the decoded video frames, and further no audio in the decoded audio frames.

8. A digital broadcast receiving method **characterized by** comprising:
a step for receiving the digital television broadcast signal and decoding the transport stream;
a step for demultiplexing the time information and the video and audio elementary stream from the decoded transport stream;
a step for buffering the video elementary stream and the audio elementary stream;
a step for performing decoding processes on the video elementary stream and the audio elementary stream that were subjected to buffering;
a step for setting the play delay time of the decoded video frames and the decoded audio frames from the beginning of the video elementary stream and the audio elementary stream; and
a step for controlling the display and output of the decoded video frames and the decoded audio frames by utilizing the time information and the play delay time.

9. A digital broadcast receiving method according to claim 8, further comprising:
a step for deciding if there is motion in the decoded video frames and audio in the decoded audio frames,
**characterized in that** the digital broadcast receiving method controls the display and output of the decoded video frames and the decoded audio frames by utilizing the time information, and the play delay time, and the results from the step for deciding if there is motion in the decoded video frames and audio in the decoded audio frames.

10. A digital broadcast receiving method according to either claim 8 or claim 9, **characterized in that** the step for setting the play delay time, monitors the buffer occupancy rate of the video elementary stream and the audio elementary stream that were buffered for a specified time, and sets the play delay time based on that value.

11. A digital broadcast receiving method according to claim 8, **characterized in that** the step for controlling the display of the decoded video frames and the decoded audio frames, performs slow-motion-play-with-audio at a specified speed according to the play delay time, and then displays and outputs the decoded video frames and the decoded audio frames at the original play period.

12. A digital broadcast receiving method according to claim 9, **characterized in that** in the step for deciding if there is motion in the decoded video frames and audio in the decoded audio frames, the display/output timing control part (109) repeatedly plays scenes judged to have no motion in the decoded video frames, and further no audio in the decoded audio frames.
